# EUROPÄISCHE PATENTSCHRIFT

(11) **EP 2 792 920 B1**
(45) Veröffentlichungstag und Bekanntmachung des Hinweises auf die Patenterteilung: **03.02.2016**
(21) Anmeldenummer: 14164055.7
(22) Anmeldetag: 09.04.2014
(51) Int. Cl.: F16L 3/10, B60R 16/02

(54) **Halterung zum Befestigen eines Schlauchs oder Rohrs an einem Kraftfahrzeug**
Clamp for fixing a hose or tube to a motor vehicle
Support pour la fixation d'un flexible ou d'un tube à un véhicule automobile

(30) Priorität: 18.04.2013 DE 102013207041
(43) Veröffentlichungstag der Anmeldung: 22.10.2014
(73) Patentinhaber: Lisa Dräxlmaier GmbH, 84137 Vilsbiburg (DE)
(72) Erfinder: Halbedl, Klaus, 86995 München (DE); Kreuzhuber, Markus, 4910 Ried im Innkreis (AT)

(56) Entgegenhaltungen:
- EP-A1- 1 167 850
- EP-A2- 2 381 553
- DE-A1-102006 025 706
- FR-A1- 2 942 289
- US-A1- 2012 318 935

## Beschreibung

### TECHNISCHES GEBIET

Die Erfindung betrifft eine Halterung zum Befestigen eines Schlauchs oder Rohrs, insbesondere eines Wellrohrs, an einem Kraftfahrzeug, beispielsweise dem Motor oder der Karosserie. Die Halterung weist ein Aufnahmeelement zum Umfassen des Schlauchs und ein Befestigungselement zum Befestigen an dem Kraftfahrzeug auf.

### STAND DER TECHNIK

Halterungen der eingangs genannten Art finden in der Automobilindustrie breite Anwendung. Beispielsweise offenbart die DE 10 2006 025 706 A1 einen Wellrohrhalter mit einem Aufnahmeelement mit zwei Teilelementen und einem Befestigungselement. Dabei wird ein Wellrohr um Kabel bzw. Leitungen zum Schutz gegen Scheuern, thermische Belastung und Marderverbiss verwendet. Weiterhin hat das Wellrohr die Funktion, elektrische Leitungen zu führen und zu schützen.

Halterungen zum Befestigen von Wellrohren werden am Motor-Kabelbaum eingesetzt, um den Motor-Kabelbaum zwischen dem bewegten Motor und der Karosserie festzuhalten. Derartige Halterungen befinden sich somit fahrzeugseitig und motorseitig. Häufig ist das Wellrohr geschlitzt und der Länge nach zu öffnen. US 2012/0318935 A offenbart eine Halterung nach dem Oberbegriff des Anspruchs 1.

Bezüglich der Halterungen werden immer höhere Anforderungen in Bezug auf die Fehlerbehaftung beim Einbau und bei der Verwendung gestellt.

### DARSTELLUNG DER ERFINDUNG

Es ist daher Aufgabe der vorliegenden Erfindung, bei einfacher Konstruktion und unter der Möglichkeit schnellen Befestigens bei minimalem Kraftaufwand eine sichere und kostengünstige Befestigung eines Schlauchs an einem Kraftfahrzeug zu schaffen. Eine derartige Halterung soll auch für geschlitzte Wellrohre und insbesondere auch an Montagepositionen verwendbar sein, die schlecht einsichtig oder erreichbar sind. Insbesondere soll eine prozesssichere Halterung geschaffen werden, die möglichst keine Fehlermöglichkeiten beim Verbau zulässt und deren korrekte Befestigung überprüfbar bzw. wahrnehmbar ist.

Diese Aufgabe wird erfindungsgemäß durch eine Halterung zum Befestigen eines Schlauchs, insbesondere eines Wellrohrs, an einem Kraftfahrzeug mit den Merkmalen von Anspruch 1 gelöst. Demnach weist die Halterung ein, insbesondere ringförmiges, Aufnahmeelement zum umfangsmäßigen Umfassen bzw. Umgeben des Schlauchs, wobei das Aufnahmeelement einen ersten und einen zweiten Vorsprung aufweist, die vom Umfang des Aufnahmeelements, insbesondere umfangsmäßig zueinander beabstandet, nach außen vorstehen, und ein Befestigungselement zum Befestigen an dem Kraftfahrzeug auf, wobei das Befestigungselement einen Eingriffsabschnitt zum Eingriff mit dem ersten Vorsprung und einen Rasthaken zum Verrasten mit dem zweiten Vorsprung aufweist. Dadurch wird zur Verbindung des Aufnahmeelements und des Befestigungselements der zweite Vorsprung bei Eingriff des ersten Vorsprungs mit dem Eingriffsabschnitt durch eine Bewegung des Aufnahmeelements in seine Umfangsrichtung unter Nachgeben des Rasthakens verrastet und das Aufnahmeelement so in das Befestigungselement eingeklemmt.

Des Weiteren ist gemäß dem Verfahren der Erfindung, das in Anspruch 12 definiert ist, ein Verfahren zum Anbringen eines Schlauchs an einem Kraftfahrzeug mittels einer derartigen Halterung vorgesehen, bei dem das Aufnahmeelement zum Verrasten des zweiten Vorsprungs mit dem Rasthaken um 10° bis 20°, vorzugsweise um 15°, gedreht wird, der Rasthaken dabei von dem Aufnahmeelement weggebogen wird und über den zweiten Vorsprung gleitet und der Rasthaken mit dem zweiten Vorsprung verrastet.

Die erfindungsgemäße Halterung bzw. das erfindungsgemäße Verfahren ermöglichen ein sicheres Halten von Schläuchen bzw. Wellrohren und der darin aufgenommenen Leitungen bzw. Kabel. Des Weiteren kann Prozesssicherheit gewährleistet werden, insbesondere dadurch, dass das Verrasten des zweiten Vorsprungs mit dem Rasthaken zu einer akustischen Wahrnehmbarkeit, z.B. einem Geräusch, führt und dadurch eine Überprüfbarkeit der Anbringung bzw. Befestigung gegeben ist. Die Montage kann schnell, unter geringem Zeitaufwand, ohne großen Kraftaufwand und ohne Werkzeug erfolgen. Des Weiteren ist die erfindungsgemäße Anordnung kostengünstig. Dadurch, dass das Aufnahmeelement den Schlauch umfasst und die Vorsprünge, die sich vom Außenumfang des Aufnahmeelements erstrecken, zur Befestigung an dem Kraftfahrzeug eingeklemmt werden, kommt es zu keinem Überlappen eines geschlitzten Wellrohres bzw. Deformieren eines ungeschlitzten Wellrohres.

Der Erfindung liegt der Gedanke zugrunde, eine Halterung zu schaffen, bei der das Aufnahmeelement dadurch in dem Befestigungselement eingeklemmt ist, dass eine Kraft auf den zweiten Vorsprung durch den Eingriffsabschnitt und eine im Wesentlichen entgegengesetzt gerichtete Kraft auf den zweiten Vorsprung durch den Rasthaken ausgeübt werden. Somit wird das Aufnahmeelement in das Befestigungselement an zwei Punkten, d.h. den zwei Vorsprüngen eingespannt, und dadurch ortsfest gehalten.

Vorzugsweise ist der Schlauch ein Wellrohr, das im Längsschnitt eine wellenförmige Kontur bestehend aus umlaufenden Umfangsnuten und Umfangsvorsprüngen aufweist.

Das Aufnahmeelement kann aus einem hart-elastischen Material, beispielsweise einem Polypropylen oder Polyamid (PA66), jeweils ohne Glasfaseranteil bestehen. Das Material des Aufnahmeelements gewährleistet die Spezifikation eines Filmscharniers. Das Befestigungselement besteht ebenso vorzugsweise aus einem hart-elastischen Material, wie beispielsweise einem Polypropylen oder Polyamid (PA6-GF15), jeweils mit einen Glasfaseranteil, vorzugsweise von <= 20%. Der Rasthaken ist nachgiebig.

Im Falle eines ringförmigen Wellrohrs weist das Aufnahmeelement einen ringförmigen Innenumfang auf, der im Wesentlichen dem Außendurchmesser des Wellrohrs entspricht. Das Aufnahmeelement kann auch andersartig ausgebildet sein, aber derart, dass es entsprechend zum Umfassen des Schlauchs ausgebildet ist. Im Falle eines Schlauchs mit einem eckigen Querschnitt wäre der Innenumfang des Aufnahmeelements entsprechend eckig ausgebildet.

Das Aufnahmeelement wird vorteilhafterweise aus zwei Halbkreisen gebildet, wobei der erste Halbkreis eine Verriegelungsnase und der zweite Halbkreis ein Eingriffsteil aufweist, in dem die Verrieglungsnase verrastbar ist. Beide Halbkreise sind mit einem dünnen Filmaterial an nur einer Seite miteinander verbunden. Das Aufnahmeelement ist nach einer vorteilhaften Ausgestaltung der Erfindung verschließbar oder geschlitzt gestaltet, um ein Einfädeln der Leitungen unnötig zu machen und einen erheblichen Kostenvorteil bei der Kabelbaummontage zu erzielen.

Das Befestigungselement dient zur Befestigung an dem Motor oder der Karosserie eines Kraftfahrzeugs und kann als Trägerplatte ausgebildet sein.

Das Aufnahmeelement kann bereits an einer bestimmten Stelle des Schlauchs bzw. Wellrohrs angepasst sein, beispielsweise durch den Komponentenlieferant. Das Aufnahmeelement wird dann bei der Montage des Motors lediglich mit dem Befestigungselement verbunden, das an der Karosserie bzw. dem Motor befestigt ist.

Erfindungs gemäss beträgt der Winkel zwischen dem ersten und dem zweiten Vorsprung bezogen auf den Mittelpunkt des Innenumfangs des Aufnahmeelements, in einer Draufsicht betrachtet, zwischen 60° und 120°, vorzugsweise 90°. Dies führt zu einer optimalen Stabilität und Handhabbarkeit der Halterung bzw. deren Anbringung.

Besonders vorteilhafte Weiterbildungen sind in den abhängigen Ansprüchen angegeben, auf die im Folgenden eingegangen wird.

Der Rasthaken kann von dem Befestigungselement, vorzugsweise senkrecht zu dem Eingriffsabschnitt, vorstehen. Dadurch wird eine zuverlässige Befestigung des Aufnahmeelements an dem Befestigungselement gewährleistet.

Weiter vorzugsweise kann das Befestigungselement eine Erhebung in Längsrichtung des aufzunehmenden Wellrohrs angrenzend an den ersten Vorsprung aufweisen. Dadurch wird ein Verschieben des Aufnahmeelements in Längsrichtung des aufzunehmenden Schlauchs verhindert. Insbesondere ist an beiden Längsseiten des ersten Vorsprungs eine Erhebung in dem Befestigungselement vorgesehen.

Der zweite Vorsprung und der Außenumfang des Aufnahmeelements können an ein geneigtes Teil angrenzen, das den zweiten Vorsprung in Richtung des ersten Vorsprungs mit dem Außenumfang des Außenelements verbindet. Die Außenfläche des geneigten Teils stellt eine tangentiale Verbindung zwischen einem Punkt am Umfang des Aufnahmeelements und dem zweiten Vorsprung dar. Das geneigte Teil ist insbesondere derart vorgesehen, dass der Rasthaken beim Bewegen des Aufnahmeelements in seine Umfangsrichtung an dem geneigten Teil entlanggleitet und so über den zweiten Vorsprung hinübergeführt werden kann. Dadurch wird der Kraftaufwand bei der Montage der Halterung minimiert.

Des Weiteren können der erste und der zweite Vorsprung im Wesentlichen parallel zueinander von dem Aufnahmeelement vorstehen. Dies ermöglicht eine besonders sichere Befestigung des Aufnahmeelements in dem Befestigungselement, da die auf die jeweiligen Vorsprünge ausgeübten Kräfte im Wesentlichen entgegengesetzt sind.

Des Weiteren drückt eine Feder, die im Befestigungselement integriert ist und sich unterhalb des Aufnahmeelements befindet, das Aufnahmeelement gegen die Rasthaken. Dies verhindert das Auftreten von Geräuschen.

Das Aufnahmeelement kann einen Steg aufweisen, der sich um den Innenumfang des Aufnahmeelements erstreckt bzw. davon nach innen vorsteht, sodass er insbesondere mit einer Umfangsnut eines aufzunehmenden Wellrohrs in Eingriff bringbar ist. Dadurch wird ein Verrutschen in Längsrichtung verhindert. Dabei ist das Wellrohr im Aufnahmeelement drehbar gelagert, sodass bei Anbringung der Halterung noch keine abschließende Positionierung des Schlauchs stattfinden muss, sondern die Positionierung diesbezüglich nachträglich und flexibel erfolgen kann.

Vorzugsweise weist das Befestigungselement einen Codiervorsprung auf und das Aufnahmeelement ist komplementär zu dem Codiervorsprung gestaltet. Das heißt, das Aufnahmeelement ist derart ausgebildet, dass ein Einrasten des Rasthakens in den zweiten Vorsprung möglich ist. Vorzugsweise ist das geneigte Teil des Aufnahmeelements komplementär zu dem Befestigungselement gestaltet. Durch eine spezielle komplementäre bzw. entsprechende Ausbildung wird gewährleistet, dass ein spezielles Aufnahmeelement mit einem speziellen Befestigungselement in Eingriff gebracht bzw. verrastet werden kann.

Weiter vorzugsweise weist die Halterung mehrere Befestigungselemente und zumindest ein Aufnahmeelement auf, wobei der Codiervorsprung jedes Befestigungselements und/oder das Aufnahmeelement, insbesondere das geneigte Teil, derart gestaltet sind/ist, dass ein Befestigungselement nur mit einem zugehörigen Aufnahmeelement verbindbar ist. Dadurch kann ein falscher Verbau vermieden werden.

Weitere Merkmale und Vorteile der Erfindung werden anhand der nachfolgenden ausführlichen Beschreibung noch näher ersichtlich werden.

### KURZE BESCHREIBUNG DER ZEICHNUNGEN

- Figur 1a: zeigt ein Aufnahmeelement gemäß der Erfindung in einer Perspektivansicht;
- Figur 1b: zeigt ein Aufnahmeelement gemäß der Erfindung in einer seitlichen Perspektivansicht;
- Figur 2: zeigt eine Halterung gemäß der Erfindung in einer Perspektivansicht in Längsrichtung;
- Figur 3: zeigt eine Halterung gemäß der Erfindung in einer perspektivischen Seitenansicht; und
- Figur 4: zeigt eine Halterung gemäß der Erfindung mit einem Schlauch in einer perspektivischen Seitenansicht.

### AUSFÜHRLICHE BESCHREIBUNG EINER BEVORZUGTEN AUSFÜHRUNGSFORM

Eine bevorzugte Ausführungsform der vorliegenden Erfindung wird nachfolgend ausführlich unter Bezugnahme auf die begleitenden Zeichnungen beschrieben.

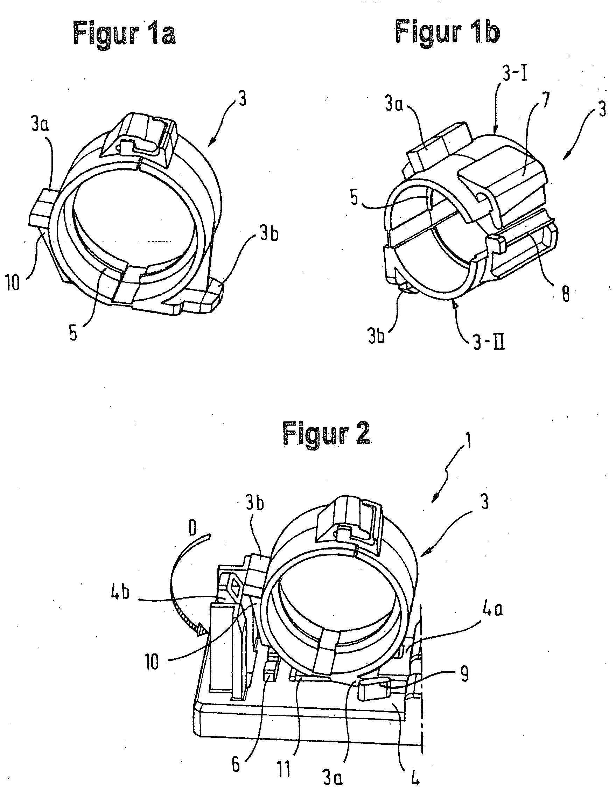

Figur 1a zeigt eine Aufnahme 3 mit einem ersten 3a und einem zweiten 3b Vorsprung. Das Aufnahmeelement 3 besteht aus zwei Halbkreisen 3-1, 3-II. Das Aufnahmeelement 3 ist ringförmig ausgebildet und weist an seinem Innenumfang einen Steg 5 auf, der radial nach innen von dem Innenumfang des Aufnahmeelements 3 vorsteht.

Aus Figur 1b ist weiter ersichtlich, dass der eine Halbkreis 3-1 eine Verriegelungsnase 7 aufweist und der andere Halbkreis 3-II ein Eingriffsteil 8 aufweist, in dem die Verriegelungsnase 7 verrastbar ist. Figur 1a ist des Weiteren zu entnehmen, dass der Winkel zwischen dem ersten 3a und dem zweiten 3b Vorsprung bezogen auf einen Mittelpunkt des Aufnahmeelements 3 etwa 90° beträgt.

Figur 2 macht deutlich, dass der zweite Vorsprung 3b an ein geneigtes Teil 10 angrenzt, das den zweiten Vorsprung 3b in Richtung des ersten Vorsprungs 3a mit dem Außenumfang des Aufnahmeelements 3 verbindet.

Des Weiteren zeigt Figur 2 das Befestigungselement 4 des Wellrohrhalters 1. Das Befestigungselement weist einen Eingriffsabschnitt 4a und einen Rasthaken 4b auf. Der Eingriffsabschnitt 4a ist mit dem ersten Vorsprung 3a in Eingriff. Der zweite Vorsprung 3b, der am Umfang des Aufnahmeelements 3 beabstandet zu dem ersten Vorsprung angeordnet ist, wird in dem Rasthaken 4b verrastet. Dabei wird das Aufnahmeelement 3 in seine Umfangsrichtung bewegt und unter Nachgeben des Rasthakens 4b verrastet, sodass das Aufnahmeelement 3 in das Befestigungselement 4 eingeklemmt wird. Die Bewegung in Umfangsrichtung erfolgt in Richtung des Pfeils D.

Wie aus Figur 2 ersichtlich ist, steht der Rasthaken 4b von dem Befestigungselement 4 senkrecht zu dem Eingriffsabschnitt 4a vor. Eine Erhebung 9 ist in Längsrichtung des aufzunehmenden Schlauchs angrenzend an den ersten Vorsprung 3a vorgesehen, sodass eine Verschiebung des Aufnahmeelements 3 in Längsrichtung verhindert wird.

Der erste 3a und der zweite 3b Vorsprung stehen annähernd parallel zueinander von dem Aufnahmeelement 3 vor. Insbesondere ist die Fläche des ersten und des zweiten Vorsprungs parallel zueinander, auf die jeweils Kraft durch das Befestigungselement 4 ausgeübt wird.

Eine Feder 11 ist in das Befestigungselement 4 integriert und zum Verringern oder Verhindern von Geräuschen vorgesehen.

Das Aufnahmeelement 3 weist einen Steg 5 auf, der sich um den Innenumfang des Aufnahmeelements 3 erstreckt, sodass er insbesondere mit einer Umfangsnut eines aufzunehmenden Wellrohrs in Eingriff bringbar ist.

Des Weiteren zeigt Figur 2 einen Codiervorsprung 6 an dem Befestigungselement 4. Das Aufnahmeelement 3 bzw. das geneigte Teil 10 ist dem Codiervorsprung 6 entsprechend gestaltet, sodass ein Befestigen des Aufnahmeelements 3 und des Befestigungselements 4 möglich ist.

Die Wellrohrhalterung 1 kann mehrere Befestigungselemente 4 und mehrere Aufnahmeelemente 3 aufweisen. Dabei sind/ist der Codiervorsprung 6 jedes Befestigungselements und/oder das Aufnahmeelement 3 bzw. der das geneigte Teil 10 derart gestaltet, dass nur ein Befestigungselement 4 mit einem zugehörigen Aufnahmeelement 3 verbindbar ist.

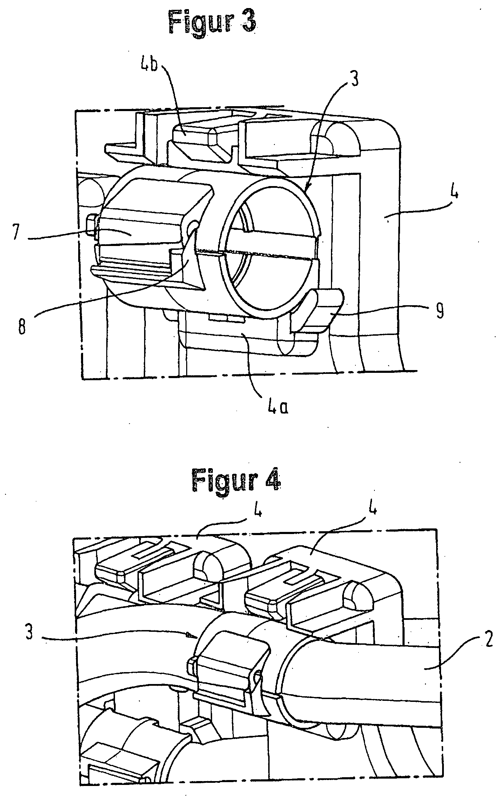

Figur 3 zeigt die erfindungsgemäße Halterung 1, bei der ein Aufnahmeelement 3 in dem Befestigungselement 4 aufgenommen ist. Der Eingriffsabschnitt 4a ist als brückenförmiges Element ausgebildet, unter das der erste Vorsprung 3a des Aufnahmeelements 3 geschoben wird.

Figur 4 zeigt einen Schlauch 2, der in dem Aufnahmeelement 3 aufgenommen ist. Das Aufnahmeelement 3 wiederum ist in dem Befestigungselement 4 befestigt. Wie aus Figur 4 hervorgeht, sind mehrere Befestigungselemente 4 und Aufnahmeelemente 3 in einer Halterung 1 nebeneinander angeordnet.

Aus Figur 2 wird deutlich, dass zum Anbringen eines Schlauchs 2 an dem Kraftfahrzeug (nicht gezeigt) mittels der Halterung 1 das Aufnahmeelement 3 zum Verrasten des zweiten Vorsprungs 3b mit dem Rasthaken 4b um etwa 15° in Richtung des Pfeils D gedreht wird. Dabei rutscht der Rasthaken 4b über das geneigte Teil 10 des Aufnahmeelements 3 und wird dadurch beim Gleiten über den zweiten Vorsprung 3b von dem Aufnahmeelement 3 weggebogen. Der Rasthaken 4b rutscht über den zweiten Vorsprung 3b hinüber und verrastet dadurch das Aufnahmeelement 3.

## Patentansprüche

1. Halterung (1) zum Befestigen eines Schlauchs oder eines Rohrs an einem Kraftfahrzeug,
mit einem Aufnahmeelement (3) zum Umfassen des Schlauchs (2), wobei das Aufnahmeelement (3) einen ersten (3a) und einen zweiten (3b) Vorsprung aufweist, die vom Aufnahmeelement nach außen vorstehen,
und einem Befestigungselement (4) zum Befestigen an dem Kraftfahrzeug, wobei das Befestigungselement einen Eingriffsabschnitt (4a) zum Eingriff mit dem ersten Vorsprung (3a) und einen Rasthaken (4b) zum Verrasten mit dem zweiten Vorsprung (3b) aufweist,
sodass zur Verbindung des Aufnahmeelements (3) und des Befestigungselements (4) der zweite Vorsprung (3b) bei Eingriff des ersten Vorsprungs (3a) mit dem Eingriffsabschnitt (4a) durch eine Bewegung des Aufnahmeelements (3) in seine Umfangsrichtung unter Nachgeben des Rasthakens (4b) verrastet wird und das Aufnahmeelement so in das Befestigungselement eingeklemmt wird,
**dadurch gekennzeichnet, dass** der Winkel zwischen dem ersten (3a) und dem zweiten Vorsprung (3b) bezogen auf den Umfangsmittelpunkt des Aufnahmeelements, in einer Draufsicht betrachtet zwischen 60 und 120 Grad beträgt.

2. Halterung nach Anspruch 1, bei der der Winkel zwischen dem ersten (3a) und dem zweiten Vorsprung (3b) bezogen auf den Umfangsmittelpunkt des Aufnahmeelements in einer Draufsicht betrachtet 90 Grad beträgt.

3. Halterung nach Anspruch 1 oder 2, bei der der Rasthaken (4b) von dem Befestigungselement, vorzugsweise senkrecht zu dem Einriffsabschnitt (4a), vorsteht.

4. Halterung nach einem der vorhergehenden Ansprüche, bei der das Befestigungselement eine Erhebung (9) in Längsrichtung des aufzunehmenden Schlauchs oder Rohrs angrenzend an den ersten Vorsprung (3a), vorzugsweise jeweils eine Erhebung angrenzend an beide Längsseiten des ersten Vorsprungs, aufweist.

5. Halterung nach einem der vorhergehenden Ansprüche, bei der der zweite Vorsprung (3b) und der Außenumfang des Aufnahmeelements an ein geneigtes Teil (10) angrenzen, das den zweiten Vorsprung in Richtung des ersten Vorsprungs mit dem Außenumfang des Aufnahmeelements verbindet.

6. Halterung nach einem der vorhergehenden Ansprüche, bei der der erste (3a) und der zweite (3b) Vorsprung im Wesentlichen parallel zueinander von dem Aufnahmeelement (3) vorstehen.

7. Halterung nach einem der vorhergehenden Ansprüche, die ein Federelement (11) zwischen dem Befestigungselement (4) und dem Aufnahmeelement (3) aufweist.

8. Halterung nach einem der vorhergehenden Ansprüche, bei der das Aufnahmeelement einen Steg (5) aufweist, der sich um den Innenumfang des Aufnahmeelements (3) erstreckt, sodass er insbesondere mit einer Umfangsnut eines aufzunehmenden Wellrohrs (2) in Eingriff bringbar ist.

9. Halterung nach einem der vorhergehenden Ansprüche, bei der das Befestigungselement (4) zumindest einen Codiervorsprung (6) aufweist und das Aufnahmeelement (3), insbesondere das geneigte Teil (10), zum Codiervorsprung (6) komplementär gestaltet ist.

10. Halterung nach Anspruch 9, die mehrere Befestigungselemente (4) und zumindest ein Aufnahmeelement (3) aufweist und bei der der Codiervorsprung (6) jedes Befestigungselements (4) und/oder das Aufnahmelement (3), insbesondere das geneigte Teil (10), derart gestaltet sind/ist, dass ein Befestigungselement (4) nur mit einem zugehörigen Aufnahmeelement (3) verbindbar ist.

11. Halterung nach einem der vorhergehenden Ansprüche, bei der das Aufnahmeelement (3) aus zwei Halbkreisen (3-1, 3-II) gebildet ist, wobei der eine Halbkreis (3-1) eine Verriegelungsnase (7) und der andere Halbkreis (3-II) ein Eingriffsteil (8) aufweist, in dem die Verriegelungsnase (7) verrastbar ist.

12. Verfahren zum Anbringen eines Schlauchs (2) an einem Kraftfahrzeug mittels der Halterung (1) nach einem der vorhergehenden Ansprüche, bei dem
das Aufnahmeelement (3) zum Verrasten des zweiten Vorsprungs (3b) mit dem Rasthaken (4b) um 10 bis 20 Grad, vorzugsweise um 15 Grad, gedreht wird,
der Rasthaken dabei von dem Aufnahmeelement weggebogen wird und über den zweiten Vorsprung gleitet und
der Rasthaken mit dem zweiten Vorsprung verrastet.

## Claims

1. Clamp (1) for fixing a hose or a tube to a motor vehicle,
with a receiving element (3) for surrounding the tube (2), wherein the receiving element (3) has a first projection (3a) and a second projection (3b), which protrude outwards from the receiving element,
and a fixing element (4) for fixing to the motor vehicle, wherein the fixing element has an engagement portion (4a) for engagement with the first projection (3a) and a latching hook (4b) for latching to the second projection (3b),
and therefore, for the connection of the receiving element (3) and the fixing element (4), when the first projection (3a) is in engagement with the engagement portion (4a), the second projection (3b) is latched by means of a movement of the receiving element (3) in the circumferential direction thereof, causing the latching hook (4b) to yield, and the receiving element is thus clamped into the fixing element,
**characterized in that** the angle between the first projection (3a) and the second projection (3b) is between 60 and 120 degrees with respect to the circumferential centre point of the receiving element, as viewed in a top view.

2. Clamp according to Claim 1, in which the angle between the first projection (3a) and the second projection (3b) is 90 degrees with respect to the circumferential centre point of the receiving element, as viewed in a top view.

3. Clamp according to Claim 1 or 2, in which the latching hook (4b) protrudes from the fixing element, preferably perpendicularly to the engagement portion (4a).

4. Clamp according to one of the preceding claims, in which the fixing element has an elevation (9) adjacent to the first projection (3a) in the longitudinal direction of the hose or tube to be received, preferably a respective elevation adjacent to both longitudinal sides of the first projection.

5. Clamp according to one of the preceding claims, in which the second projection (3b) and the outer circumference of the receiving element are adjacent to an inclined part (10) which connects the second projection to the outer circumference of the receiving element in the direction of the first projection.

6. Clamp according to one of the preceding claims, in which the first projection (3a) and the second projection (3b) protrude substantially parallel to each other from the receiving element (3).

7. Clamp according to one of the preceding claims, which has a spring element (11) between the fixing element (4) and the receiving element (3).

8. Clamp according to one of the preceding claims, in which the receiving element has a web (5) which extends around the inner circumference of the receiving element (3) such that said web can be brought into engagement in particular with a circumferential groove of a corrugated tube (2) to be received.

9. Clamp according to one of the preceding claims, in which the fixing element (4) has at least one coding projection (6), and the receiving element (3), in particular the inclined part (10), is designed in a complementary manner to the coding projection (6).

10. Clamp according to Claim 9, which has a plurality of fixing elements (4) and at least one receiving element (3) and in which the coding projection (6) of each fixing element (4) and/or the receiving element (3), in particular the inclined part (10), are/is designed in such a manner that a fixing element (4) is connectable only to an associated receiving element (3).

11. Clamp according to one of the preceding claims, in which the receiving element (3) is formed from two semicircles (3-I, 3-II), wherein the one semicircle (3-I) has a locking lug (7) and the other semicircle (3-II) has an engagement part (8) in which the locking lug (7) is latchable.

12. Method for attaching a hose (2) to a motor vehicle by means of the clamp (1) according to one of the preceding claims, in which
the receiving element (3) is rotated by 10 to 20 degrees, preferably by 15 degrees, in order to latch the second projection (3b) to the latching hook (4b), the latching hook is bent away in the process from the receiving element and slides over the second projection, and
the latching hook latches with the second projection.

## Revendications

1. Support (1) pour la fixation d'un flexible ou d'un tuyau à un véhicule automobile,
comprenant un élément de réception (3) destiné à entourer le flexible (2), l'élément de réception (3) présentant une première saillie (3a) et une deuxième saillie (3b) qui font saillie vers l'extérieur depuis l'élément de réception,
et un élément de fixation (4) pour la fixation au véhicule automobile, l'élément de fixation présentant une partie d'engagement (4a) pour l'engagement avec la première saillie (3a) et un crochet d'encliquetage (4b) pour l'encliquetage avec la deuxième saillie (3b),
de telle sorte que pour la connexion de l'élément de réception (3) et de l'élément de fixation (4), la deuxième saillie (3b), lors de l'engagement de la première saillie (3a) avec la partie d'engagement (4a), soit encliquetée par un mouvement de l'élément de réception (3) dans sa direction périphérique par effacement du crochet d'encliquetage (4b) et que l'élément de réception soit ainsi serré dans l'élément de fixation, **caractérisé en ce que** l'angle entre la première saillie (3a) et la deuxième saillie (3b), par rapport au centre périphérique de l'élément de réception, considéré en vue de dessus, est compris entre 60 et 120 degrés.

2. Support selon la revendication 1, dans lequel l'angle entre la première saillie (3a) et la deuxième saillie (3b), par rapport au centre périphérique de l'élément de réception, considéré en vue de dessus, vaut 90 degrés.

3. Support selon la revendication 1 ou 2, dans lequel le crochet d'encliquetage (4b) fait saillie depuis l'élément de fixation, de préférence perpendiculairement à la partie d'engagement (4a).

4. Support selon l'une quelconque des revendications précédentes, dans lequel l'élément de fixation présente un rehaussement (9) dans la direction longitudinale du flexible ou du tuyau à recevoir, en position adjacente à la première saillie (3a), de préférence à chaque fois un rehaussement en position adjacente aux deux côtés longitudinaux de la première saillie.

5. Support selon l'une quelconque des revendications précédentes, dans lequel la deuxième saillie (3b) et la périphérie extérieure de l'élément de réception sont adjacentes à une partie inclinée (10) qui relie la deuxième saillie dans la direction de la première saillie à la périphérie extérieure de l'élément de réception.

6. Support selon l'une quelconque des revendications précédentes, dans lequel la première saillie (3a) et la deuxième saillie (3b) font saillie essentiellement parallèlement l'une à l'autre depuis l'élément de réception (3).

7. Support selon l'une quelconque des revendications précédentes, qui présente un élément de ressort (11) entre l'élément de fixation (4) et l'élément de réception (3).

8. Support selon l'une quelconque des revendications précédentes, dans lequel l'élément de réception présente une nervure (5) qui s'étend autour de la périphérie intérieure de l'élément de réception (3), de telle sorte qu'elle puisse être amenée en prise notamment avec une rainure périphérique d'un tuyau ondulé (2) devant être reçu.

9. Support selon l'une quelconque des revendications précédentes, dans lequel l'élément de fixation (4) présente au moins une saillie de codage (6) et l'élément de réception (3), en particulier la partie inclinée (10), est configuré de manière complémentaire à la saillie de codage (6).

10. Support selon la revendication 9, qui présente plusieurs éléments de fixation (4) et au moins un élément de réception (3) et dans lequel la saillie de codage (6) de chaque élément de fixation (4) et/ou l'élément de réception (3), en particulier la partie inclinée (10), est/sont configuré(s) de telle sorte qu'un élément de fixation (4) puisse seulement être connecté à un élément de réception associé (3).

11. Support selon l'une quelconque des revendications précédentes, dans lequel l'élément de réception (3) est formé de deux demi-cercles (3-1, 3-11), l'un des demi-cercles (3-1) présentant un ergot de verrouillage (7) et l'autre demi-cercle (3-II) présentant une partie d'engagement (8) dans laquelle peut s'encliqueter l'ergot de verrouillage (7).

12. Procédé pour monter un flexible (2) sur un véhicule automobile au moyen du support (1) selon l'une quelconque des revendications précédentes, dans lequel
l'élément de réception (3), pour l'encliquetage de la deuxième saillie (3b) avec le crochet d'encliquetage (4b), est tourné de 10 à 20 degrés, de préférence de 15 degrés,
le crochet d'encliquetage étant en l'occurrence recourbé à l'écart de l'élément de réception et glissant sur la deuxième saillie et
le crochet d'encliquetage s'encliquetant avec la deuxième saillie.
